# EUROPEAN PATENT SPECIFICATION

(11) **EP 3 172 027 B1**
(45) Date of publication and mention of the grant of the patent: **11.04.2018**
(21) Application number: 15741350.1
(22) Date of filing: 26.06.2015
(51) Int. Cl.: B29C 49/46, B29C 49/12, B29C 49/06, B29C 49/42, B29B 13/08, B29K 105/00, B29L 31/00

(54) **MOULDING DEVICE FOR MOULDING A CONTAINER STARTING WITH A PARISON IN PLASTIC MATERIAL, MOULDING METHOD AND MOULDING MACHINE**
FORMVORRICHTUNG ZUR FORMUNG EINES BEHÄLTERS, BEGINNEND MIT EINEM VORFORMLING AUS KUNSTSTOFFMATERIAL, FORMVERFAHREN UND FORMMASCHINE
DISPOSITIF DE MOULAGE POUR MOULER UN RÉCIPIENT À PARTIR D'UNE PARAISON EN MATIÈRE PLASTIQUE, PROCÉDÉ DE MOULAGE ET MACHINE À MOULER

(30) Priority: 21.07.2014 IT PR20140050
(43) Date of publication of application: 31.05.2017
(73) Proprietor: Gea Procomac S.p.A., 43038 Sala Baganza (PR) (IT)
(72) Inventor: PAGLIARINI, Paolo, 43123 Parma (IT)
(74) Representative: Dondi, Silvia
(86) International application number: PCT/IB2015/054839
(87) International publication number: WO 2016/012884

(56) References cited:
- EP-A1- 2 431 409
- US-A1- 2014 015 171
- US-B1- 6 565 791

## Description

### Technical field

The object of the present invention is a moulding device for moulding a container starting with a parison in plastic material, a moulding method and a moulding machine.

The reference sector is the bottling of so-called "sensitive" food products, i.e. products that are particularly sensitive to bacteriological contamination and oxidation, such as, for example, isotonic drinks, juices, nectars, soft drinks, tea, milk-based drinks, coffee-based drinks, etc., for which the prevention of possible microbiological contamination throughout all packaging stages is of fundamental importance.

### State of the Art

Packaging lines using aseptic technology are already known, wherein the various operations take place in a controlled contamination environment, so that the bottled products can be stored for a prolonged period of time and have chemical/physical and organoleptic stability even at room temperature.

Aside from differences in design, a "conventional" aseptic bottling line envisages:
- moulding the container starting with a parison made of a plastic material;
- chemical sterilization of the moulded container;
- rinsing, filling and capping of the filled container, to be carried out in a sterile environment.

The main drawback of conventional lines is related to the need to have to sterilize the container once it has been moulded and to maintain the sterilized state thereof throughout all subsequent operations, for example the filling and capping operations.

A modern concept of an aseptic bottling line instead envisages:
- sterilization of the parison using chemical agents or radiation sterilization;
- "aseptic" moulding of the container starting with a parison made of a thermoplastic material;
- rinsing and capping of the filled container, to be carried out in a sterile environment.

In this regard, the Applicant has developed a moulding apparatus for moulding under aseptic conditions, in which the moulding rotary carousel is protected by an isolation device suitable for defining a controlled-contamination environment, while the movement means for moving the carousel and moulds are located outside of said isolation device (see European Patent no. EP2246176).

The preliminary sterilization stage involves all devices that come into contact with the parison subjected to moulding by blowing and stretching, including for example the gripping members, the stretching rod and the blown air circuit. The Applicant has thus developed *ad hoc* solutions for the stretching rod (see European Patent no. EP2340157) and for the blown air circuit (European patent application no. EP2643142).

In this manner, the Applicant has reached the point of developing a completely aseptic blow moulding machine, characterized by evident structural complexity.

It should also be added that not all the manual procedures required during operation (e.g. removal of obstacles) can be performed with the use of handling gloves. In some cases, it may be necessary to open the isolator access door, resulting in the loss of sterile conditions. Upon completion of the procedure, a sterile environment must be restored, resulting in an evident loss of time due to downtime of the line.

Aside from sterilization using chemical agents or radiation sterilization, the use of plasma for the sterilization of objects has been adopted for several decades, for example in the medical field.

The plasma is obtained by passing a gas or a gas mixture (e.g. air or oxygen) between two electrodes between which an electrical discharge is generated, so that ionized particles are formed. Since the first plasma generators, which comprised a vacuum chamber, technology has evolved towards the generation of atmospheric pressure plasma. For example, patent no. WO2007/071720 refers to a method and apparatus for the sterilization of objects by means of plasma generated at atmospheric pressure.

The principal advantages associated with the use of plasma for sterilization consist of:
- treatment of objects of any shape and material;
- rapidity of the treatment;
- safety of the process, owing to the low temperatures involved and the absence of chemical agents.

Plasma sterilization has thus spread to diverse industrial sectors, among which the bottling sector as well.

For example, patent no. WO2009/101156 proposes the treatment of containers and HEPA filters using plasma.

Patent no. WO99/17334 discloses the use of plasma for sterilizing the inside of bottles.

Patent no. EP2182991 discloses an apparatus and method for sterilizing parisons made of a plastic material using plasma. It is specified that in a first embodiment the sterilization treatment uses plasma at ambient pressure, whereas in a second embodiment the plasma treatment is carried out at a pressure higher than ambient pressure. In all of the embodiments described, the plasma generator is located along the transport path of the parisons, upstream of the blowing device, and therefore sterilization takes place prior to the blowing phase.

Patent no. WO2012/130197 also describes the use of plasma for sterilizing parisons made of plastic material. In this solution, the plasma generator is located at the blowing station. In particular, the plasma is generated at atmospheric pressure outside of the parison and then inserted therein by means of a nozzle placed in the stretching rod.

If one wishes to use plasma to decontaminate parisons or containers on an aseptic bottling line, one is in any case always faced with the problem of having to manage the interface separating the controlled-contamination environment and the contaminated external environment.

Other related moulding devices are described in US2014/015171A1, US6565791B1 and EP2431409A1.

In this context, the basic technical task of the present invention is to offer a moulding device for moulding a container starting with a parison in plastic material, as well as a moulding method and a moulding machine, all of which overcoming the drawbacks of the prior art mentioned hereinabove.

### Disclosure of the invention

In particular, an aim of the present invention is to make available a device and a machine for moulding a container starting with a parison in plastic material, both the device and the machine being structurally simpler compared to the prior-art solutions.

The defined technical task and the specified aims are substantially achieved by a moulding device for moulding a container starting with a parison in plastic material, by a moulding method and by a moulding machine, said device, said method and said machine comprising the technical characteristics set forth in one or more of the appended claims.

### Brief description of drawings

Further characteristics and advantages of the present invention will become more apparent from the approximate and thus non-limiting description of a preferred, but not exclusive, embodiment of a moulding device for moulding a container starting with a parison in plastic material, a moulding method and a moulding machine, as illustrated in the accompanying drawings, of which:

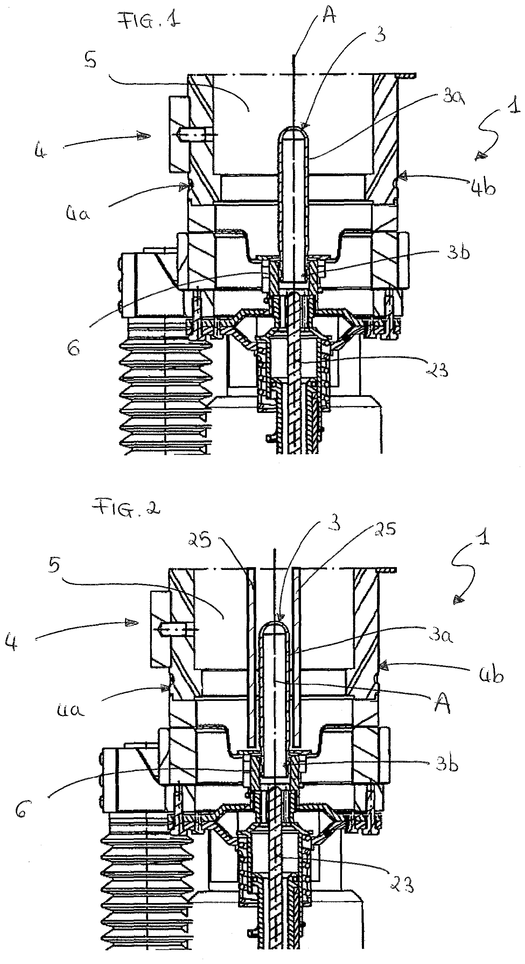

- figure 1 is a sectional view of a first embodiment of a moulding device for moulding a container starting with a parison in plastic material, according to the present invention;
- figure 2 is a sectional view of a second embodiment of a moulding device for moulding a container starting with a parison in plastic material, according to the present invention.

### Detailed description of preferred embodiments of the invention

With reference to the figures, a moulding device for moulding a container starting with a parison 3 in plastic material, for example PET, is indicated by the number 1.

The parison 3 has a tubular body 3a and a neck 3b that does not undergo the moulding process.

The moulding device 1 comprises two half-moulds 4a, 4b that can be moved close to each other to define at least one housing cavity 5 for the parison 3.

The moulding device 1 further comprises a blowing nozzle 6 (or seal) and a stretching rod 23.

The blowing nozzle 6 is applicable on the neck 3b of the parison 3 to blow a fluid into it. The pressure of the fluid is preferably higher than the atmospheric pressure. Alternatively, the fluid is at atmospheric pressure.

For example, the fluid can consist of air.

In all the embodiments described and illustrated herein, the fluid is provided by supply means of a known type.

As can be seen in the figures, the blowing nozzle 6 is applied on the neck 3b of the parison 3 in such a manner as to abut and create a tight seal on a transverse protrusion (known in the field by the technical term "bague") of the neck 3b of the parison 3.

The stretching rod 23 is insertable in the parison 3 to stretch it. The stretching rod 23 is partially or entirely made of metal material.

The moulding device 1 further comprises a hollow body 25 sized so as to envelop at least partially the parison 3 placed in the housing cavity 5.The hollow body 25 is partially or entirely made of metal material.

Originally, means are provided for applying a voltage difference between the stretching rod 23 and the hollow body 25 so as to generate a plasma inside the housing cavity 5.

If the plasma is generated by the fluid (air) already present in the housing cavity 5, it is at atmospheric pressure.

If the plasma is generated by the blown fluid, it has a pressure equal to or higher than the atmospheric pressure (in that it is obtained starting from a fluid having a pressure equal to or higher than the atmospheric pressure).

The two half-moulds 4a, 4b are relatively mobile with respect to each other, at least between a first and a second configuration. In the first configuration, the two half-moulds 4a, 4b are moved close to each other to define the housing cavity 5 for the parison 3.In the second configuration, the two half-moulds 4a, 4b are moved away from each other to enable insertion of the parison 3 or to disengage the moulded container.

In a first embodiment, the hollow body 25 is obtained by moving the two half-moulds 4a, 4b close to each other in the first configuration; the two half-moulds 4a, 4b enveloping the entire tubular body 3a of the parison 3.

In other words, the hollow body 25 is provided by the union of the two half-moulds 4a, 4b in the first configuration. The two half-moulds 4a, 4b are preferably made entirely of metal material.

The two half-moulds 4a, 4b are preferably part of a mould 4. In particular, the mould 4 also comprises a bottom plate (not illustrated) positioned on one of the bases of the mould 4.

Given that the voltage difference is applied between the stretching rod 23 and the half-moulds 4a, 4b in the first configuration, the plasma is generated inside the housing cavity 5 for the parison 3. In other words, the stretching rod 23 and the joined half-moulds 4a, 4b constitute the electrode and counter electrode of a plasma generator, respectively.

Given that the seal 6 is at the same potential as the two half-moulds 4a, 4b, the plasma is also generated in the external zone of the neck 3b of the parison 3.

In the first embodiment, the voltage difference required between the stretching rod 23 and the two joined half-moulds 4a, 4b can reach a value of about 30 kV.

In a second embodiment, the hollow body 25 is a body that is substantially tubular in shape. This hollow tubular body 25 is therefore separate from the two half-moulds 4a, 4b. In this case, the stretching rod 23 and the hollow tubular body 25 constitute the electrode and counter electrode of a plasma generator, respectively.

The hollow tubular body 25 is preferably movable inside the housing cavity 5 at least between an operating position, in which it partially or entirely envelops the tubular body 3a of the parison 3, and a rest position, in which it is moved away from the parison 3.

The moulding device 1 preferably comprises movement means (not illustrated) for moving the hollow tubular body 25 and the movement means are operatively active on the latter to bring it from the rest position to the operative position, and vice versa.

In particular, the movement means are operatively active on the hollow tubular body 25 to move it linearly along the longitudinal axis A of the housing cavity 5.

The hollow tubular body 25 is preferably coaxial with the housing cavity 5. In particular, when the hollow tubular body 25 is in the operating position, it proves to be coaxial with the tubular body 3a of the parison 3.

For example, the hollow tubular body 25 is formed from a substantially continuous metal sheet. Alternatively, the hollow tubular body 25 is formed from a metal sheet having a plurality of holes or through openings. An additional variant comprises a hollow tubular body 25 consisting of a metal cage formed from a mesh or a plurality of parallel spaced bars.

The moulding machine (not illustrated) proposed herein comprises a plurality of moulding devices 1 described hereinabove.

The moulding machine is preferably of the rotary carousel type. Alternatively, the moulding machine may be of the linear type.

The method for moulding a container starting with a parison in plastic material is explained below.

First of all, the parison 3 must be arranged in the housing cavity 5.

For this purpose, the two half-moulds 4a, 4b are brought into the second configuration, in which they are at a distance from each other to enable insertion of the parison 3.

Following this, the two half-moulds 4a, 4b are brought into the first configuration, that is to say, they are moved close to each other to define the housing cavity 5 for the parison 3.

The blowing nozzle 6 is applied on the neck 3b of the parison 3 in such a manner as to create a tight seal on the bague 6c and close the opening of the parison 3 in a tightly sealed manner.

The stretching rod 23 is inserted in the parison 3. In particular, the stretching rod 23 passes through the blowing nozzle 6 and gradually penetrates the parison 3.

The method shall now be described in further detail with reference to the first embodiment.

In this embodiment, the two joined half-moulds 4a, 4b form the hollow body 25 that envelops the parison 3. In particular, the two joined half-moulds 4a, 4b envelop the tubular body 3a of the parison 3.

At this point, the fluid at a pressure higher than the atmospheric pressure is blown into the parison 3.

In particular, the blowing step comprises two separate substeps: one for pre-blowing and one for blowing.

During the pre-blowing step, the fluid blown into the parison 3 has a maximum pressure of about 16 bar.

During the pre-blowing step, the stretching rod 23 gradually penetrates the parison 3 until reaching the bottom thereof. After touching the bottom, the stretching rod 23 continues its linear course so as to stretch the tubular body 3a of the parison 3 until substantially reaching the desired length of the container to be obtained.

During the blowing step, the fluid blown into the parison 3 has a maximum pressure of about 40 bar.

While the fluid is being blown into the parison 3, a voltage difference is applied between the stretching rod 23 and the joined half-moulds 4a, 4b (forming the hollow body 25) and the voltage difference is such as to bring about an electrical discharge that leads to the generation of plasma. For example, the voltage difference applied is in the range of 20-30 kV.

In particular, the generation of plasma can take place only during the pre-blowing step or during the subsequent blowing step as well.

Preferably, the application of the voltage difference between the stretching rod 23 and the joined half-moulds 4a, 4b (forming the hollow body 25) also takes place after completion of the step of blowing fluid. For this purpose, following the blowing step, the stretching rod 23 is kept inside the moulded container for a length of time in the range of 1 to 2 seconds.

Envisaging plasma generation also following the blowing step, sterilization is completed by acting directly upon the moulded container.

For example, following the blowing step, the residual gas is discharged to the exterior of the moulded container and then the voltage difference is applied between the stretching rod 23 and the joined half-moulds 4a. 4b.

The generation of plasma in this step is decidedly simpler, for the fluid present in the moulded container is at atmospheric pressure.

Alternatively, it is possible to generate plasma (i.e., apply the voltage difference between the stretching rod 23 and the joined half-moulds 4a, 4b) only during the pre-blowing step or for part of the pre-blowing step.

As indicated above, it is also possible to generate the plasma as soon as the parison 3 is loaded into the housing cavity 5 and prior to the blowing step, using the air at atmospheric pressure already present in the housing cavity 5.

The method shall now be described in further detail with reference to the second embodiment.

In this embodiment, after or during the joining of the two-moulds 4a, 4b, movement of the hollow tubular body 25 takes places, bringing it from the rest position to the operating position.

In the preferred variant, the hollow tubular body 25 is coaxial with the housing cavity 5 and is inserted in the latter through a slot (not illustrated) obtained in the mould 4. For example, this slot is obtained in one of the two bases of the mould 4.

In particular, the hollow tubular body 25 is moved linearly along the longitudinal axis A of the housing cavity 5 until it partially or entirely envelops the tubular body 3a of the parison 3.

A voltage difference is subsequently applied between the stretching rod 23 and the hollow tubular body 25 and the voltage difference is such as to bring about an electrical discharge that leads to the generation of plasma.

For example, the voltage difference applied is in the range of 20-30 kV.

At the same time, the fluid at a pressure higher than the atmospheric pressure, preferably 8 bar, can be blown into the parison 3. The plasma generated makes it possible to sterilize the parison.

In this context, sterilization is understood as both the total elimination of microorganisms and the reduction of microorganisms (in this latter case, it is also referred to as "decontamination").

Subsequently, the hollow tubular body 25 is brought back to the rest position. Advantageously, the overall duration of the movements of the hollow tubular body 25 (from the rest position to the operating position, and vice versa) is several tenths of a second.

Moulding of the container proceeds by blowing fluid at a maximum pressure of about 40 bar in the parison 3.

In particular, during the pre-blowing process, the stretching rod 23 continues its gradual penetration of the parison 3 until reaching the bottom thereof. After touching the bottom, the stretching rod 23 continues its linear course so as to stretch the tubular body 3a of the parison 3 until substantially reaching the desired length of the container to be obtained.

After the pre-blowing step, there is a blowing step, in which fluid at a maximum pressure about 40 bar is blown into the parison 3.

There is a step for applying a voltage difference between the stretching rod 23 and the joined half-moulds 4a, 4b preferably following the blowing step. For this purpose, following the blowing step, the stretching rod 23 is kept inside the parison 3 for a length of time in the range of 1 to 2 seconds.

By activating the plasma also following the blowing step, sterilization is completed, acting directly on the moulded container.

For example, following the blowing step, the residual gas is discharged to the exterior of the moulded container and then the voltage difference is applied between the stretching rod 23 and the joined half-moulds 4a. 4b.

The generation of plasma in this step is decidedly simpler, for the fluid present in the moulded container is at atmospheric pressure.

If the step for generating plasma after the blowing step is not included, the stretching rod 23 will already begin to retract during the blowing step.

The characteristics and the advantages of the moulding device and method for moulding a container starting with a parison in plastic material according to the present invention prove to be clearly indicated in the description provided.

In particular, the moulding device proposed herein also makes it possible to sterilize the parison, owing to the generation of plasma directly inside the housing cavity housing the parison. This moulding device is compact and structurally simple in that it only requires the application of a voltage difference between the metal stretching rod and a hollow body placed in the housing cavity.

The first embodiment is the simplest one, in that it is the two joined half-moulds that function as a counter electrode with respect to the stretching rod and therefore an additional body that acts as a counter electrode is not required.

Moreover, when plasma is generated during the moulding process (e.g. only during the pre-blowing step or also during the blowing step), the blowing process takes place by means of the plasma. In this manner, the parison is moulded and sterilized simultaneously.

Given that sterilization and moulding of the parison are inseparable processes, no further measures are required to maintain ambient contamination below the desired level. In fact, the container is moulded under sterile conditions owing to the plasma generated therein. Therefore, the dimensions are limited and the line is simplified in light of the simultaneous execution of two steps, i.e., sterilization and moulding, which until now had always been performed sequentially.

In the second embodiment, the hollow tubular body that acts as a counter electrode with respect to the stretching rod is instead present in the housing cavity.

In this embodiment, the distance between the two electrodes (the stretching rod and the hollow tubular body) is shorter compared to the first embodiment, so that the volume of dielectric between the electrodes facilitates plasma ignition.

In this case, generation of plasma always takes place in the moulding device, prior to moulding or during part of the pre-blowing step and therefore with decidedly low pressures (even at atmospheric pressure).

This makes the plasma generation process simpler. In fact, it is a known fact that an increase in the pressure of the incoming fluid makes it more difficult to activate the plasma because it increases the resistance of the fluid (which functions as a dielectric) to the discharge.

Moreover, the realization of the hollow tubular body as a metal cage offers the advantage of reducing movement time for moving it (given that the cage is lighter than a body having solid walls), thus making it possible to begin sterilization promptly prior to moulding and making it possible to move the cage away quickly even before the beginning of the pre-blowing step. In fact, the total time required for movement of the metal cage consists of several tenths of a second. Furthermore, by generating the plasma at atmospheric pressure after the blowing step (by means of the application of a voltage difference between the stretching rod and the half-moulds), sterilization is also completed on the moulded container.

This is even more advantageous in the second embodiment, given that sterilization of the parison is carried out prior to moulding or during the first moulding step.

Given that sterilization of the parison is carried out in the housing cavity just before the moulding process or at the same time as the moulding process (and possibly subsequently to the moulding process, on the moulded container), a "conventional" blower can be used. This "conventional" blower thus becomes a blower/sterilizer.

The structural complexity of the "aseptic" blower with an isolator can thus be left aside, along with all the members operating at the interface thereof (e.g. sealing systems between the sterile zone and the external environment, confinement of the stretching rod, sterilization system for the blown air circuit, etc.).

Sterilization cycles for sterilizing the environment and the blown air prior to production are no longer necessary.

Moreover, the sterilizer for sterilizing the parisons upstream of the blower can thus be eliminated.

In conclusion, the use of plasma makes it possible to reduce sterilization time, to avoid the use of chemical agents and the accumulation of peroxides in the container, and to sterilize the internal surface and the external neck of the parison and the container in a substantially uniform manner.

## Claims

1. Device for moulding (1) a container from a parison (3) in plastic material, comprising:
two half-moulds (4a, 4b) which may be moved close to each other to define at least a housing cavity (5) of the parison (3);
a stretching rod (23), manufactured at least partially in metal material, insertable into said parison (3) to stretch it;
a blowing nozzle (6) applicable to the neck (3b) of the parison (3) to blow into it a fluid having a pressure equal to or higher than the atmospheric pressure;
a hollow body (25), manufactured at least partially in metal material, sized so as to envelop at least partially the parison (3) placed in said housing cavity (5),
**characterised in that** it comprises means for applying a voltage difference between said stretching rod (23) and said hollow body (25) so as to generate a plasma inside said housing cavity (5), said plasma having a pressure equal to or higher than the atmospheric pressure.

2. Moulding device (1) according to claim 1, wherein said hollow body (25) is obtained from the union of said half-moulds (4a, 4b) in the first configuration, said plasma being generated inside said housing cavity (5).

3. Moulding device (1) according to claim 1, wherein said hollow body (25) has a substantially tubular shape and is moveable inside said housing cavity (5) at least between an operating position in which it partially or entirely envelops a tubular body (3a) of the parison (3), and a rest position in which it is moved away from the parison (3).

4. Moulding device (1) according to claim 3, wherein said hollow tubular body (25) is coaxial to said housing cavity (5).

5. Moulding device (1) according to claim 3 or 4, wherein said hollow tubular body (25) is formed of a substantially continuous metal sheet.

6. Moulding device (1) according to claim 3 or 4, wherein said hollow tubular body (25) consists of a metal cage formed of a mesh or of a plurality of parallel and distanced bars.

7. Machine for moulding containers from parisons (3) in plastic material, comprising a plurality of moulding devices (1) according to any one of the previous claims.

8. Method for moulding a container from a parison (3) in plastic material, comprising the steps of:
inserting into said parison (3) a stretching rod (23) manufactured in metal material;
enveloping the parison (3) with a hollow body (25) manufactured in metal material and formed by two half-moulds (4a, 4b) that are brought close to each other so as to define a housing cavity (5) of the parison (3);
blowing a fluid into said parison (3), said step of blowing comprising the sub-steps of:
pre-blowing the fluid having a maximum pressure of around 16 bar;
blowing the fluid having a maximum pressure of around 40 bar so as to obtain the container,
**characterised in that** it comprises a step of applying a voltage difference between said stretching rod (23) and said hollow body (25) so as to generate a plasma.

9. Moulding method according to claim 8, wherein the step of applying the voltage difference occurs before or during the step of blowing the fluid into the parison (3).

10. Moulding method according to claim 8 or 9, wherein said hollow body (25) is a substantially tubular body, so the step of enveloping the parison (3) occurs by moving said hollow tubular body (25) linearly along the longitudinal axis (A) of said housing cavity (5) until said hollow tubular body (25) partially or entirely envelops a tubular body (3a) of the parison (3).

11. Moulding method according to claims 8 to 10, further comprising a further step of applying a voltage difference between said stretching rod (23) and said half-moulds (4a, 4b), which occurs subsequently to said blowing step.

## Patentansprüche

1. Vorrichtung zur Formung (1) eines Behälters aus einem Vorformling (3) aus Kunststoffmaterial, umfassend:
zwei Formhälften (4a, 4b), die einander zugeführt werden können, um mindestens einen Aufnahmehohlraum (5) des Vorformlings (3) zu definieren;
eine Streckstange (23), gefertigt zumindest teilweise aus Metallmaterial, die in den Vorformling (3) eingefügt werden kann, um ihn zu strecken;
eine Blasdüse (6), die am Hals (3b) des Vorformlings (3) angebracht werden kann, um in diesen ein Fluid einzublasen, aufweisend einen Druck größer oder gleich dem Atmosphärendruck;
einen Hohlkörper (25), gefertigt zumindest teilweise aus Metallmaterial, so bemessen, dass er mindestens teilweise den Vorformling (3), der im Aufnahmehohlraum (5) platziert ist, einhüllt, **dadurch gekennzeichnet, dass** sie Mittel zum Anlegen einer Spannungsdifferenz zwischen der Streckstange (23) und dem Hohlkörper (25) aufweist, sodass ein Plasma im Aufnahmehohlraum (5) erzeugt wird, wobei das Plasma einen Druck aufweist, größer oder gleich dem Atmosphärendruck.

2. Formvorrichtung (1) nach Anspruch 1, wobei der Hohlraumkörper (25) aus der Verbindung der Formhälften (4a, 4b) in der ersten Konfiguration erhalten wird und das Plasma im Aufnahmehohlraum (5) erzeugt wird.

3. Formvorrichtung (1) nach Anspruch 1, wobei der Hohlkörper (25) eine im Wesentlichen rohrförmige Form aufweist und im Aufnahmehohlraum (5) zumindest zwischen einer Betriebsposition, in der er teilweise oder vollständig einen rohrförmigen Körper (3a) des Vorformlings (3) einhüllt, und einer Ruheposition, in der er wegführend vom Vorformling (3) bewegt wird, bewegbar ist.

4. Formvorrichtung (1) nach Anspruch 3, wobei der hohle rohrförmige Körper (25) koaxial zum Aufnahmehohlraum (5) angeordnet ist.

5. Formvorrichtung (1) nach Anspruch 3 oder 4, wobei der hohle rohrförmige Körper (25) aus einem im Wesentlichen durchgehenden Metallblech ausgebildet ist.

6. Formvorrichtung (1) nach Anspruch 3 oder 4, wobei der hohle rohrförmige Körper (25) aus einem Metallkäfig besteht, geformt aus einem Gitter oder einer Vielzahl aus parallel angeordneten und beabstandeten Stäben.

7. Maschine zur Formung von Behältern aus Vorformlingen (3) aus Kunststoffmaterial, umfassend eine Vielzahl an Formvorrichtungen (1) nach einem der vorhergehenden Ansprüche.

8. Verfahren zur Formung eines Behälters aus einem Vorformling (3) aus Kunststoffmaterial, umfassend die folgenden Schritte:
Einfügen einer aus Metallmaterial gefertigten Streckstange (23) in den Vorformling (3);
Einhüllen des Vorformlings (3) mit einem Hohlkörper (25), gefertigt aus Metallmaterial und gebildet durch zwei Formhälften (4a, 4b), die einander zugeführt werden, sodass sie einen Aufnahmehohlraum (5) des Vorformlings (3) definieren;
Blasen eines Fluids in den Vorformling (3), wobei der Schritt zum blasen die folgenden Unterschritte umfasst:
Vorblasen des Fluids, aufweisend einen maximalen Druck von ungefähr 16 bar;
Blasen des Fluids, aufweisend einen maximalen Druck von ungefähr 40 bar, sodass der Behälter erhalten wird,
**dadurch gekennzeichnet, dass** es einen Schritt zum Anlegen einer Spannungsdifferenz zwischen der Streckstange (23) und dem Hohlkörper (25) umfasst, sodass ein Plasma erzeugt wird.

9. Formverfahren nach Anspruch 8, wobei der Schritt zum Anlegen der Spannungsdifferenz vor oder während des Schritts zum Blasen des Fluids in den Vorformling (3) stattfindet.

10. Formverfahren nach Anspruch 8 oder 9, wobei der Hohlkörper (25) ein im Wesentlichen rohrförmiger Körper ist, sodass der Schritt zum Einhüllen des Vorformlings (3) stattfindet, indem der hohle rohrförmige Körper (25) linear entlang der Längsachse (A) des Aufnahmehohlraums (5) bewegt wird, bis der hohle rohrförmige Körper (25) teilweise oder vollständig einen rohrförmigen Körper (3a) des Vorformlings (3) einhüllt.

11. Formverfahren nach Anspruch 8 bis 10, zudem umfassend einen weiteren Schritt zum Anlegen einer Spannungsdifferenz zwischen der Streckstange (23) und den Formhälften (4a, 4b), der nach dem Schritt zum Blasen stattfindet.

## Revendications

1. Dispositif de moulage (1) d'un récipient à partir d'une paraison (3) en matière plastique, comprenant :
deux demi-moules (4a, 4b) pouvant se déplacer en se rapprochant l'un de l'autre pour définir au moins une cavité de logement (5) de la paraison (3) ; une tige d'étirage (23), fabriquée au moins partiellement dans un matériau en métal, pouvant être introduite dans ladite paraison (3) pour l'étirer ;
une buse de soufflage (6) applicable au col (3b) de la paraison (3) pour souffler dans celui-ci un fluide ayant une pression égale ou supérieure à la pression atmosphérique ;
un corps creux (25), fabriqué au moins partiellement dans un matériau en métal, dimensionné de manière à envelopper au moins partiellement la paraison (3) placée dans ladite cavité de logement (5), **caractérisé en ce qu'**il comprend des moyens pour appliquer une différence de tension entre ladite tige d'étirage (23) et ledit corps creux (25) de manière à générer un plasma à l'intérieur de ladite cavité (5), ledit plasma ayant une pression égale ou supérieure à la pression atmosphérique.

2. Dispositif de moulage (1) selon la revendication 1, dans lequel ledit corps creux (25) est obtenu à partir de l'union desdits demi-moules (4a, 4b) dans la première configuration, ledit plasma étant généré à l'intérieur de ladite cavité de logement (5).

3. Dispositif de moulage (1) selon la revendication 1, dans lequel ledit corps creux (25) a une forme substantiellement tubulaire et est mobile à l'intérieur de ladite cavité de logement (5) au moins entre une position fonctionnelle dans laquelle il enveloppe partiellement ou entièrement un corps tubulaire (3a) de la paraison (3), et une position de repos dans laquelle il est éloigné de la paraison (3).

4. Dispositif de moulage (1) selon la revendication 3, dans lequel ledit corps tubulaire creux (25) est coaxial à ladite cavité de logement (5).

5. Dispositif de moulage (1) selon la revendication 3 ou 4, dans lequel ledit corps tubulaire creux (25) est formé d'une tôle métallique substantiellement continue.

6. Dispositif de moulage (1) selon la revendication 3 ou 4, dans lequel ledit corps tubulaire creux (25) consiste en une cage de métal formée d'un grillage ou d'une pluralité de barres parallèles et espacées.

7. Machine pour mouler des récipients à partir de paraisons (3) en matière plastique, comprenant une pluralité de dispositifs de moulage (1) selon l'une quelconque des revendications précédentes.

8. Procédé de moulage d'un récipient à partir d'une paraison (3) en matière plastique, comprenant les étapes de :
introduire dans ladite paraison (3) une tige d'étirage (23) fabriquée dans un matériau en métal ;
envelopper la paraison (3) avec un corps creux (25) fabriqué dans un matériau en métal et formé par deux demi-moules (4a, 4b) étant rapprochés l'un de l'autre de manière à définir une cavité de logement (5) de la paraison (3) ;
souffler un fluide dans ladite paraison (3), ladite étape de soufflage comprenant les sous-étapes de :
présouffler le fluide à une pression maximale d'environ 16 bars ;
souffler le fluide à une pression maximale d'environ 40 bars de manière à obtenir le récipient,
**caractérisé en ce qu'**il comprend une étape consistant à appliquer une différence de tension entre ladite tige d'étirage (23) et ledit corps creux (25) de sorte à générer un plasma.

9. Procédé de moulage selon la revendication 8, dans lequel l'étape consistant à appliquer la différence de tension se déroule avant ou pendant l'étape consistant à souffler le fluide dans la paraison (3).

10. Procédé de moulage selon la revendication 8 ou 9, dans lequel ledit corps creux (25) est un corps substantiellement tubulaire, de sorte que l'étape consistant à envelopper la paraison (3) se déroule en déplaçant ledit corps tubulaire creux (25) linéairement le long de l'axe longitudinal (A) de ladite cavité de logement (5) jusqu'à ce que ledit corps tubulaire creux (25) enveloppe partiellement ou entièrement un corps tubulaire (3a) de la paraison (3).

11. Procédé de moulage selon les revendications de 8 à 10, comprenant de plus une étape supplémentaire consistant à appliquer une différence de tension entre ladite tige d'étirage (23) et lesdits demi-moules (4a, 4b) se déroulant à la suite de ladite
étape de soufflage.
